# EUROPÄISCHE PATENTANMELDUNG

(11) **EP 2 141 060 A2**
(43) Veröffentlichungstag der Anmeldung: **06.01.2010**
(21) Anmeldenummer: 09007643.1
(22) Anmeldetag: 10.06.2009
(51) Int. Cl.: B62D 3/14

(54) **Lenkeinrichtung für ein Radfahrzeug mit Achsschenkellenkung**

(30) Priorität: 03.07.2008 DE 102008031213
(71) Anmelder: Rheinmetall Landsysteme GmbH, 24107 Kiel (DE)
(72) Erfinder: Kock, Flemming, 24116 Kiel (DE); Lumkowsky, Frank, 24229 Dänischenhagen (DE)
(74) Vertreter: Dietrich, Barbara

(57) **Zusammenfassung**

Lenkeinrichtung für ein Radfahrzeug mit Achsschenkellenkung, wobei die Drehbewegung eines Lenkrades (1) über eine Lenkwelle (3) mit Ritzel (2) auf eine Zahnstange (5) übertragen wird.

Um eine Lenkeinrichtung anzugeben, mittels der auf einfache Weise eine hydrostatische Lenkung sowohl der Vorder- als auch der Hinterräder eines Radfahrzeuges durchführbar ist, sind zwischen dem Lenkrad (1) und den die Schwenkbewegung der Achsschenkel bewirkenden Getriebegliedern (20, 21) zwei getrennte hydraulische Getriebe vorzusehen, wobei Lenkzylinder (15, 15') der beiden hydraulischen Getriebe über flexible Hydraulikleitungen (13, 14, 13', 14') mit jeweils einer Hydropumpe verbunden sind, welche jeweils aus einem doppelwirkenden ersten Hydrozylinder (10, 10') mit beidseitigen Kolbenstangen besteht. Zur Betätigung der beiden Hydropumpen ist jeweils eine der beiden Kolbenstangen (9, 8') mit einem der Enden (6, 7) der Zahnstange (5) verbunden, die bei Drehung des Lenkrades (1) axial verschoben wird.

## Beschreibung

Die Erfindung betrifft eine Lenkeinrichtung für ein Radfahrzeug mit Achsschenkellenkung, wobei die Drehbewegung eines Lenkrades über eine Lenkwelle mit Ritzel auf eine Zahnstange übertragen wird. Dabei wird im Folgenden unter einer Zahnstange nicht nur eine vollständig mit Zähnen versehene Stange bezeichnet, sondern auch solche Stangen, die nur in einem Teilbereich mit Zähnen versehen sind.

Derartige Lenkeinrichtungen sind an sich bekannt. In der Regel wirken bei rein manueller Betätigung derartiger Lenkeinrichtungen die Enden der Zahnstange über Gelenke auf Getriebeglieder (beispielsweise Spurstangen und Spurhebel), welche ihrerseits die zu lenkenden Achsschenkel betätigen.

Ein Lenksystem und ein Verfahren zur Steuerung eines Fahrzeugs mit einem Aktuator, der einen Endabschnitt einer Spurstange quer zur Richtung verschieben kann, in welcher der Endabschnitt von dem Lenkgetriebe verstellt werden kann, beschreibt die DE 103 38 998 A1.

Eine Serie von Dokumenten wie DE 10 2004 053 722 A1, DE 10 2004 053 7723 A1, DE 10 2004 053 724 A1, DE 10 2004 053 725 A1, DE 10 2004 053 726 A1 sowie DE 10 2004 053 727 A1 beschäftigt sich mit verschiedenen Achsschenkellenkungen für lenkbar ausgeführte Fahrzeugachsen.

Mit der DE 10 2005 023 284 A1 wird eine weitere Vorrichtung zur Lenkung von Rädern eines Fahrzeuges mit Achsschenkellenkung beschrieben, bei welcher durch eine im Betrieb des Fahrzeugs veränderliche wirksame Länge einer Kolbenstange eine Lenkwinkelabweichung einstellbar ist. Auch die DE 10 2005 023 288 A1 beschäftigt sich damit.

Insbesondere bei Radfahrzeugen, welche aus vorgefertigten Baugruppen modular zusammenbaubar sind, ergibt sich bei den Lenkeinrichtungen das Problem, dass sich die zu lenkenden Räder und das jeweilige Lenkrad des Fahrers in zwei unabhängigen Modulen befinden. Es ist bei derartigen Fahrzeugen daher erforderlich, die Übertragungskomponenten zwischen dem Lenkrad und den Achsschenkel mindestens teilweise nicht starr, sondern flexibel auszugestalten, um eine möglichst aufwendige Montage, Demontage und Wartung der entsprechenden Fahrzeuge zu vermeiden.

Um dieses zu erreichen, sind bereits Lenksysteme bekannt, bei denen biegsame Wellen zur Übertragung der Lenkbewegungen von dem Lenkrad auf die zu lenkenden Räder verwendet werden. Doch werden bei diesen Systemen durch die benötigten Über- und Untersetzungs- sowie Zwischengetrieben die vorgeschriebenen Rückstellkräfte des Lenkrades stark reduziert oder sind nicht vorhanden.

Ferner sind auch hydrostatische Lenksysteme bekannt, die insbesondere zur Lenkung der Hinterräder eines Radfahrzeuges mit Allradlenkung dienen. Dabei sind entsprechende Lenkzylinder mit mechanischen Getriebegliedern verbunden, welche auf die zu lenkenden Achsschenkel der Hinterräder wirken. Als Hydropumpen zur Druckerzeugung werden bei diesen Lenksystemen in der Regel die für die Hilfskraftlenkung der Vorderräder benötigten und von dem Verbrennungsmotor angetriebenen Pumpen verwendet.

Aus der DE 101 01 827 A1 ist schließlich eine Lenkeinrichtung zur Lenkung der Vorderräder eines Kraftfahrzeuges bekannt, die im Normalbetrieb nach dem Konzept "steer by wire" arbeitet, so dass zwischen dem Lenkrad und den gelenkten Rädern keine mechanische Verbindung erforderlich ist.

Diese bekannte Lenkeinrichtung umfasst zwei parallel zueinander angeordnete, doppelwirkende Hydrozylinder mit beidseitig herausgeführten Kolbenstangen, welche als Lenkzylinder dienen. Diese Lenkzylinder sind zwei separaten Hydraulikkreisen zugeordnet und mittels entsprechender Ventile steuerbar, wobei Hydropumpen zur Erzeugung des Druckes mittels zweier separater Elektromotoren angetrieben werden. Die beiden Kolbenstangen eines der beiden Lenkzylinder sind bei dieser Lenkeinrichtung fluchtend mit einer im Notbetrieb durch das Lenkrad betätigbaren Zahnstange verbunden, welche über mechanische Getriebeglieder auf die zu lenkenden Achsschenkel wirkt.

Nachteilig ist bei dieser bekannten Lenkeinrichtung unter anderem der außerordentlich hohe Aufwand, der mit der Verwendung der beiden (jeweils aus motorbetriebenen Hydropumpen, Ventilen und Stellzylindern bestehenden) hydraulischen Getriebe verbunden ist.

Der Erfindung liegt die Aufgabe zugrunde, eine Lenkeinrichtung anzugeben, mittels der auf einfache Weise eine hydrostatische Lenkung sowohl der Vorder- als auch der Hinterräder eines Radfahrzeuges durchführbar ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, mit dem Lenkrad die Lenkbewegung mittels einer Zahnrad-Zahnstangen-Kombination in eine lineare Bewegung umzuwandeln, welche auf zwei (redundanten) doppelwirkenden Zylindern, vorzugsweise mit gleichem Kammerinhalt, übertragen wird. Diese sind mittels Hydraulik-/Schlauchleitung mit Stellzylindern, bevorzugt gleichen Kammerinhaltes, für die Radverstellung verbunden und führen die Lenkbewegung mit oder ohne Servounterstützung der Räder aus.

Dazu sind zwischen dem Lenkrad und den, die Schwenkbewegung der Achsschenkel bewirkenden Getriebegliedern zwei getrennte hydraulische Getriebe vorgesehen, wobei die Lenkzylinder der beiden hydraulischen Getriebe über flexible hydraulische Leitungen mit jeweils einer Hydropumpe verbunden sind, welche jeweils aus einem doppelwirkenden Hydrozylinder mit beidseitigen Kolbenstangen besteht. Zur Betätigung der beiden Hydropumpen ist jeweils eine der beiden Kolbenstangen mit jeweils einem der Enden der Zahnstange verbunden, die über ein Ritzel bei Drehung des Lenkrades axial verschoben wird. Dabei besitzen die beiden als Hydropumpen wirkenden ersten Hydrozylinder und die als Lenkzylinder wirkenden zweiten Hydrozylinder, wie bereits erwähnt, bevorzugt jeweils den gleichen Kammerinhalt.

Eine derartige Lenkeinrichtung benötigt keine zusätzlichen Energiequellen, weist eine hohe Betriebssicherheit auf, da nur eine geringe Anzahl von Einzelteilen erforderlich ist, und verursacht nur geringe Systemkosten, da einfache hydraulische und mechanische Standardkomponenten zum Einsatz kommen.

Damit ausreichend hohe Rückstellkräfte auf das Lenkrad wirken, können vorzugsweise die Kolben der Lenkzylinder mittels federelastischer Elemente (Federn oder Rückstellelemente) beispielsweise in ihrer mittleren Position gehalten werden.

Als vorteilhaft hat es sich erwiesen, wenn zwischen den Hydraulikleitungen der beiden voneinander unabhängigen Hydraulikkreise zwei Manometer zur Anzeige des Differenzdruckes zwischen den Hydraulikkreisen vorgesehen sind.

Außerdem sollte zur Berücksichtigung eines Temperatur- und Volumenanstieges des Hydrauliköles jede Kammer des jeweils ersten Hydrozylinders mit mindestens einem Druckbegrenzungsventil versehen sein.

Ferner hat es sich als zweckmäßig erwiesen, Rückschlagventile zur Berücksichtigung eines Temperatur- und Volumenrückganges sowie Druckbegrenzungsventile als Überdrucksicherung vorzusehen.

Weitere Einzelheiten und Vorteile der Erfindung ergeben sich aus dem folgenden, anhand einer Figur erläuterten Ausführungsbeispiel.

In der Fig. ist eine erfindungsgemäße Lenkeinrichtung schematisch wiedergegeben, die beispielsweise zur Lenkung nicht dargestellter Vorderräder eines Radfahrzeuges dient. Dabei ist mit 1 ein Lenkrad bezeichnet, welches mit einer ein Ritzel 2 tragenden Lenkwelle 3 drehfest verbunden ist. Dieses Ritzel 2 greift in die Verzahnung 4 einer Zahnstange 5 ein, so dass bei Drehung des Lenkrades 1 eine axiale Verschiebung der Zahnstange 5 erfolgt.

Die beiden gegenüberliegenden Enden 6, 7 der Zahnstange 5 wirken jeweils mit einem doppelwirkenden ersten Hydrozylinder 10, 10' mit beidseitig herausgeführten Kolbenstangen zusammen, wobei die als Hydropumpen wirkenden ersten Hydrozylinder 10, 10' getrennten Hydraulikkreisen zugeordnet sind. Dabei sind die Enden 6, 7 der Zahnstange 5 jeweils mit einer der beiden Kolbenstangen 8, 9 und 8', 9' des jeweiligen ersten Hydrozylinders 10, 10' axial verschiebbar verbunden.

Die sich an die Kolben 22, 22' der ersten Hydrozylinder 10, 10' seitlich anschließenden beiden Kammern 11, 12 und 11' 12' sind über Hydraulikleitungen 13, 14, und 13', 14' jeweils mit einem doppelwirkenden zweiten Hydrozylinder 15, 15' mit beidseitig herausgeführten Kolbenstangen 16, 17 und 16', 17' verbunden. Die Kolbenstangen 16, 17 und 16', 17' dieser als Lenkzylinder wirkenden zweiten Hydrozylinder 15, 15' der beiden Hydraulikkreise sind parallel zueinander angeordnet und an ihren Enden jeweils über Verbindungsteile 18, 19 miteinander verbunden. Diese Verbindungsteile 18, 19 sind über Getriebeglieder 20, 21 mit den Achsschenkel (nicht dargestellt) der zu lenkenden Räder verbindbar.

Zur Unterstützung der selbsttätigen Rückstellung in die Mittelstellung des Lenkrades 1 sind die Kolben 23, 23' der zweiten Hydrozylinder 15, 15' von federelastischen Elementen 24 (in der Regel Druckfedern) beaufschlagt. Dabei sind die federelastischen Elemente 24 beidseitig von den Kolben 23, 23' innerhalb des zweiten Hydrozylinders 15, 15' angeordnet.

Ferner befinden sich zwischen den Hydraulikleitungen 13 und 13' sowie 14 und 14' der beiden voneinander unabhängigen Hydraulikkreise zwei Manometer 25, 26 zur Anzeige des Differenzdruckes zwischen den beiden Hydraulikkreisen.

Zur Berücksichtigung eines Temperatur- und Volumenanstieges des Hydrauliköles ist jede Kammer 11, 12 und 11', 12' des jeweils ersten Hydrozylinders 10, 10' mit mindestens einem ersten Druckbegrenzungsventil 27, 27' versehen. Bei Erwärmung der zwei Hydraulikkreisläufe und der damit verbundenen Volumenausdehnung sorgen daher die ersten Druckbegrenzungsventile 27, 27' für ein Absteuern des Mehrvolumens. Kommt es zu einer Abkühlung und einer damit verbundenen Volumenreduzierung, so wird über je ein Rückschlagventil 28, 28' Hydraulikflüssigkeit aus jeweils einem Ölreservoir 100, 100' nachgefördert. Vorgenanntes gilt in Lenkradnullstellung und bei Drücken, die den Druck der Rückstellkräfte übersteigen.

Optional sind in jedem Hydraulikkreislauf zwei zweite Druckbegrenzungsventile 29, 29' als Überdrucksicherung vorgesehen.

Nachfolgend wird näher auf die Wirkungsweise der erfindungsgemäßen Lenkeinrichtung eingegangen.

Dreht der Fahrer des entsprechenden Fahrzeuges das Lenkrad 1 zwecks Lenkung der Räder, wird über das auf der Lenkwelle 3 drehfest angeordnete Ritzel 2 die Zahnstange 5 axial verschoben. Dadurch werden die beiden Kolben 22, 22' der beiden voneinander unabhängigen (redundanten) ersten Hydrozylindern 10, 10' mit gleichen Kammervolumen ebenfalls verschoben und der Druck ändert sich in den Kammern 11, 12 und 11', 12' dieser Hydrozylinder 10, 10'.

Dadurch ändert sich auch der Druck in den über die Hydraulikleitungen 13, 14 und 13', 14' mit den Kammern 11, 12 und 11', 12' des ersten Hydrozylinders 10, 10' verbundenen Kammern der Lenkzylinder 15, 15', so dass auch die Kolben 23, 23' in den Lenkzylindern 15, 15' gegen den Druck der entsprechenden elastischen Federelemente 24 verschoben werden und die aus den Lenkzylindern 15, 15' herausgeführten Kolbenstangen 16, 17 und 16', 17' über die Verbindungsteile 18, 19 auf die Getriebeglieder 20, 21 wirken, welche eine entsprechende Auslenkung der Räder (mit oder ohne Servounterstützung) verursachen.

Fällt ein Hydraulikkreislauf aus, bleibt die erfindungsgemäße Lenkeinrichtung voll funktionsfähig, da die nicht Kraft übertragenden Hydrozylinder durch das in Funktion bleibende System mitgeführt werden. Die beiden Manometer 25, 26 zur Differenzdruckanzeige zeigen den eventuellen Ausfall eines der beiden hydraulischen Getriebe bei Lenkbewegung und damit Ansteuerung des jeweils funktionsfähigen hydraulischen Getriebes an.

### Bezugszeichenliste

- 1: Lenkrad
- 2: Ritzel
- 3: Lenkwelle
- 4: Verzahnung
- 5: Zahnstange
- 6,7: Enden
- 8,9: Kolbenstangen
- 8',9': Kolbenstangen
- 10,10': erste Hydrozylinder
- 11, 12: Kammern
- 11',12': Kammern
- 13,14: Hydraulikleitungen
- 13',14': Hydraulikleitungen
- 15,15': zweite Hydrozylinder, Lenkzylinder
- 16,17: Kolbenstangen
- 16',17': Kolbenstangen
- 18,19: Verbindungsteile
- 20,21: Getriebeglieder
- 22,22': Kolben (erster Hydrozylinder)
- 23,23': Kolben (zweiter Hydrozylinder)
- 24: federelastisches Element
- 25,26: Manometer
- 27,27': erste Druckbegrenzungsventile
- 28,28': Rückschlagventile
- 29,29': zweite Druckbegrenzungsventile

- 100, 100': Ölreservoir

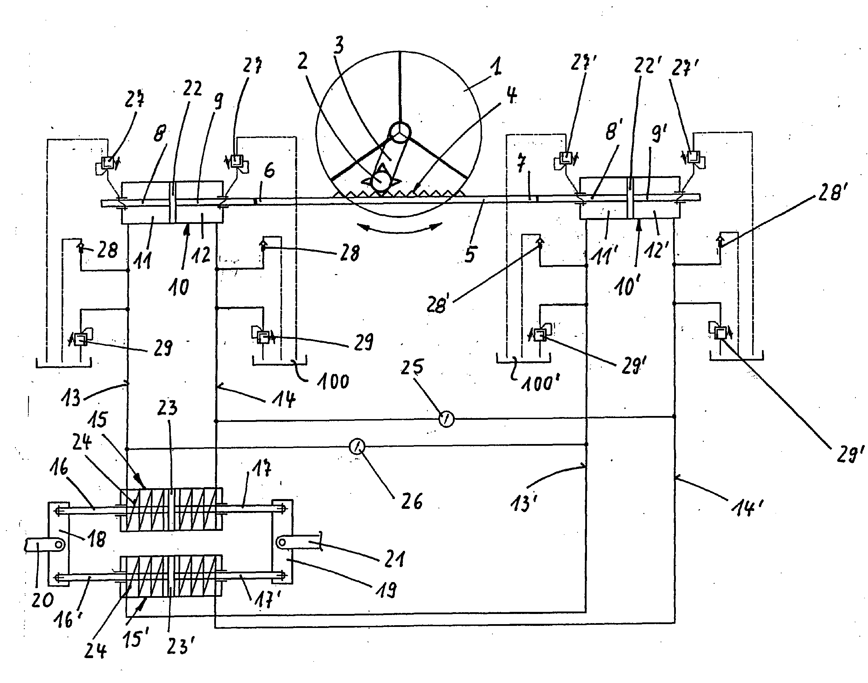

## Patentansprüche

1. Lenkeinrichtung für ein Radfahrzeug mit Achsschenkellenkung, wobei die Drehbewegungen eines Lenkrades (1) über eine Lenkwelle (3) mit Ritzel (2) auf eine Zahnstange (5) übertragen wird, mit den Merkmalen:
a) die beiden gegenüberliegenden Enden (6, 7) der Zahnstange (5) sind jeweils mit einer Kolbenstange (9, 8') eines doppelwirkenden ersten Hydrozylinders (10, 10') mit beidseitig herausgeführten Kolbenstangen axialverschiebbar verbunden, wobei die als Hydropumpen wirkenden ersten Hydrozylinder (10, 10') separaten Hydraulikkreisen zugeordnet sind;
b) die beiden Kammern (11, 12, 11', 12') des ersten Hydrozylinders (10, 10') jedes Hydraulikkreises sind über Hydraulikleitungen (13, 14, 13', 14') jeweils mit einem doppelwirkenden zweiten Hydrozylinder (15, 15') mit beidseitig herausgeführter Kolbenstange verbunden, wobei die Kolbenstangen (16, 17, 16', 17') der parallel zueinander angeordneten, als Lenkzylinder wirkenden zweiten Hydrozylinder (15, 15') beider Hydraulikkreise an ihren Enden jeweils über Verbindungsteile (18, 19) miteinander verbunden sind, welche über Getriebeglieder (20, 21) mit den zu lenkenden Achsschenkel verbindbar sind.

2. Lenkeinrichtung nach Anspruch 1, **dadurch gekennzeichnet, dass** die Kolben (23, 23') der zweiten Hydrozylinder (15, 15') mittels federelastischer Elemente (24) in ihrer mittleren Position gehalten werden.

3. Lenkeinrichtung nach Anspruch 2, **dadurch gekennzeichnet, dass** die federelastischen Elemente (24) beidseitig von den Kolben (23, 23') innerhalb des zweiten Hydrozylinders (15, 15') angeordnet sind.

4. Lenkeinrichtung nach Anspruch 1 oder 2, **dadurch gekennzeichnet, dass** zwischen den Hydraulikleitungen (13, 13' und 14, 14') der beiden voneinander getrennten Hydraulikkreise zwei Manometer (25, 26) zur Anzeige des Differenzdruckes zwischen den Hydraulikkreisen vorgesehen sind.

5. Lenkeinrichtung nach einem der Ansprüche 1 bis 4, **dadurch gekennzeichnet, dass** die Kammern (11, 12, 11', 12') der ersten Hydrozylinder (10, 10') jeweils mit mindestens einem Druckbegrenzungsventil (27, 27') versehen sind.

6. Lenkeinrichtung nach einem der Ansprüche 1 bis 5, **dadurch gekennzeichnet, dass** in jeder der Hydraulikleitungen (13, 14, 13', 14') jeweils mindestens ein Rückschlagventil (28, 28') und ein Druckbegrenzungsventil (29, 29') angeordnet ist.
